# EUROPÄISCHE PATENTSCHRIFT

(11) **EP 4 396 451 B1**
(45) Veröffentlichungstag und Bekanntmachung des Hinweises auf die Patenterteilung: **08.10.2025**
(21) Anmeldenummer: 22764749.2
(22) Anmeldetag: 12.08.2022
(51) Int. Cl.: F02C 3/24, F02C 6/20, F02C 7/224, B60K 3/00, B60L 1/00

(54) **ANTRIEBSSYSTEM FÜR EIN FAHRZEUG**
DRIVE SYSTEM FOR A VEHICLE
SYSTÈME D'ENTRAÎNEMENT POUR UN VÉHICULE

(30) Priorität: 01.09.2021 DE 102021122631
(43) Veröffentlichungstag der Anmeldung: 10.07.2024
(73) Patentinhaber: Obrist Technologies GmbH, 6890 Lustenau (AT)
(72) Erfinder: KNOOP, Andreas, 73728 Esslingen (DE); OBRIST, Frank, 6900 Bregenz (AT)
(74) Vertreter: Meissner Bolte Partnerschaft mbB
(86) Internationale Anmeldenummer: PCT/EP2022/072672
(87) Internationale Veröffentlichungsnummer: WO 2023/030867

(56) Entgegenhaltungen:
- WO-A1-2020/249599
- WO-A2-2008/087685
- JP-A- 2001 221 062
- US-A1- 2001 023 580
- US-A1- 2019 291 595

## Beschreibung

Die Erfindung betrifft ein Antriebssystem für ein Fahrzeug, ein Verfahren zum Betreiben eines Antriebssystems, ein Fahrzeug und die Verwendung eines solchen Antriebssystems in einem Fahrzeug. Ein Antriebssystem nach dem Oberbegriff des Patentanspruchs 1 ist beispielsweise aus der WO 2008/087685 A2 bekannt.

Die aktuelle Entwicklung im Hinblick auf die Diskussion um klimafreundliche Mobilität und die technische Weiterentwicklung rein elektrischer Antriebssysteme haben Lösungen hervorgebracht, bei denen ein Verbrennungsmotor einen Generator antreibt. Dieser wiederum speist eine Antriebsbatterie mit generierter elektrischer Energie, die zumindest einem Elektromotor die gespeicherte elektrische Energie zum Antreiben beispielsweise von Rädern eines Personenkraftfahrzeugs zur Verfügung stellt. Derartige Stromaggregate sind grundsätzlich aus dem Stand der Technik bekannt. Insbesondere beschreiben die auf die Anmelderin zurückgehenden DE 10 2014 115 042 A1, DE 10 2014 115 041 A1, DE 10 2014 115 044 A1 und EP 2 633 166 B1 solche Stromaggregate. Die bekannten Stromaggregate sind vielfältig anwendbar. Vorzugsweise kommen diese in Hybridfahrzeugen zum Einsatz.

Aus der eingangs genannten WO 2008/087685 A2 ist ein Antriebssystem für Fahrzeuge bekannt, das eine Gasturbine mit einem Verdichter und einer Antriebsturbine, wobei zwischen dem Verdichter und der Antriebsturbine ein Brenner angeordnet ist. Das System weist ferner einen Reformer für Abgas, der mit dem Brenner verbunden ist, und einen Generator auf, der mit der Gasturbine gekoppelt ist. Das System weist zusätzlich eine Batterie auf, die während eines Starts des Antriebssystems aufgeladen wird.

Die JP 2001 221062 A beschreibt eine Gasturbine mit niedrigem Stromverbrauch, die als Antriebssystem für ein Fahrzeug zum Einsatz kommt. Die Gasturbine umfasst einen Plasmareaktor als Kerneinheit, um eine hohe Performance und eine lange Lebensdauer zu realisieren, wobei Luftverschmutzung vermieden werden soll.

Der Erfindung liegt die Aufgabe zu Grunde, ein Antriebssystem für ein Fahrzeug mit völlig neuem Ansatz bereitzustellen, das klimafreundlich und effizient betreibbar ist. Der Erfindung liegt ferner die Aufgabe zu Grunde, ein Verfahren zum Betreiben eines Antriebssystems, ein Fahrzeug und die Verwendung eines Antriebssystems in einem Fahrzeug bereitzustellen.

Erfindungsgemäß wird diese Aufgabe im Hinblick auf das Antriebssystem durch den Gegenstand des Anspruchs 1 gelöst. Hinsichtlich des Verfahrens, des Fahrzeugs und der Verwendung wird die vorstehend genannte Aufgabe jeweils durch den Gegenstand des Anspruchs 9 (Verfahren), des Anspruchs 13 (Fahrzeug) und des Anspruchs 14 (Verwendung) gelöst.

Konkret wird die Aufgabe durch ein Antriebssystem für ein Fahrzeug, insbesondere für ein Hybridfahrzeug, mit wenigstens einem Stromaggregat und wenigstens einer Antriebsbatterie gelöst, die miteinander elektrisch gekoppelt sind, wobei das Stromaggregat umfasst:
- wenigstens eine Gasturbine, die wenigstens einen ersten Verdichter zum Verdichten von angesaugter Verbrennungsluft, wenigstens eine Turbine zum Antreiben des ersten Verdichters und wenigstens eine dazwischen angeordnete Brennkammer zum Verbrennen eines Luft-/Kraftstoffgemisches aufweist, die mit dem ersten Verdichter und der Turbine fluidverbunden ist;
- wenigstens einen Reformer zum Reformieren eines verdampften Kraftstoffes, insbesondere von verdampftem Methanol, zu einem Synthesegas, wobei der Reformer mit der Brennkammer zum Zuführen des Synthesegases verbunden ist; und
- wenigstens einen Generator, der mit der Gasturbine zum Aufnehmen und/oder Einbringen einer Drehbewegung mechanisch gekoppelt ist,

wobei die Antriebsbatterie mit dem Generator des Stromaggregates elektrisch verbunden und dazu angepasst ist, wenigstens einen Elektromotor zum Antreiben des Fahrzeugs und/oder den Generator mit elektrischer Energie zu versorgen. Die Gasturbine umfasst wenigstens eine Leiteinrichtung zur Strömungsleitung des verbrannten Luft-/Kraftstoffgemisches, insbesondere Abgases, die in Strömungsrichtung zwischen der Brennkammer und der Turbine angeordnet ist,
wobei die Leiteinrichtung dem Reformer in einer Kraftstoffströmungsrichtung vorgeschaltet und dazu angepasst ist, im Betrieb Wärme von dem verbranntem Luft-/Kraftstoffgemisch aufzunehmen und durch Wärmeübertragung einen flüssigen Kraftstoff, insbesondere flüssiges Methanol, zu verdampfen.

Das erfindungsgemäße Antriebssystem baut auf der Grundidee auf, die elektrische Energie für ein elektrisch angetriebenes Fahrzeug unter Verwendung einer Gasturbine und eines Generators zu erzeugen. Die Gasturbine und der Generator bilden dabei eine Turbinen-Generator-Einheit. Die Turbinen-Generator-Einheit dient lediglich zur Erzeugung elektrischer Energie, so dass die tatsächliche Antriebsleistung für das Fahrzeug rein elektrisch erfolgt. Das erfindungsgemäße Antriebssystem ist vielseitig einsetzbar. Insbesondere kann das Antriebssystem in Hybridfahrzeugen, beispielsweise einem Personenkraftfahrzeug, einem Lastkraftwagen, einem Omnibus, einem Wasserfahrzeug beziehungsweise Boot und/oder einem Fluggerät zum Einsatz kommen.

Besonders vorteilhaft ist die Anwendung des Reformers, der dazu angepasst ist, einen verdampften Kraftstoff zu reformieren. Dadurch lässt sich aus dem verdampften Kraftstoff ein Synthesegas mit höherem Heizwert als das Ausgangsedukt herstellen. Dies steigert den Wirkungsgrad der Gasturbine und somit des gesamten Stromaggregates. Das erfindungsgemäße Antriebssystem weist somit durch die Kombination der Gasturbine mit dem Reformer eine erhöhte Effizienz auf. Besonders bevorzugt besteht der verdampfte Kraftstoff aus verdampftem Methanol. Aus dem verdampften Methanol sind durch den Reformer zumindest zwei Arten von Synthesegas mit erhöhtem Heizwert herstellbar. Dadurch ist die Betriebsvariabilität der Gasturbine erhöht.

Methanol ist ein sehr einfach herzustellender und synthetisierender Kraftstoff auf Basis von Kohlenwasserstoff und/oder Alkohol. Insbesondere ist die CO₂-Bilanz für den Betrieb des Fahrzeugs dadurch senkbar bzw. ausgleichbar, wenn das Methanol durch regenerative Energie produziert wird. Auf diese Weise ist ein besonders klimafreundlicher Betrieb eines mit dem Antriebssystem ausgestatteten Fahrzeugs möglich.

Der Generator ist mit der Gasturbine mechanisch gekoppelt, um die Drehbewegung der Gasturbine aufzunehmen bzw. die Gasturbine in Drehung zu versetzen. Der Generator kann dazu mit einer Turbinenwelle der Gasturbine direkt verbunden sein. Konkreter kann der Generator mit seiner Generatorwelle mit der Turbinenwelle direkt verbunden sein. Dies hat den Vorteil, dass Drehzahlen der Gasturbine durch den Generator ohne Übersetzungsverluste in elektrische Energie direkt umwandelbar sind. Insbesondere ist es möglich, dass Drehzahlen von bis zu 100000 min⁻¹ (Umdrehungen pro Minute) in elektrische Energie direkt umwandelbar sind. Dies hat den Vorteil, dass Getriebe mit großen Bauformen und hohem Gewicht entfallen.

Alternativ ist möglich, dass der Generator über ein Getriebe mit der Gasturbine mechanisch gekoppelt ist. Dadurch können Drehzahlen der Gasturbine anforderungsspezifisch übersetzt werden, um den Einsatz von kleineren Generatoren zu ermöglichen. Es ist möglich, dass das Stromaggregat mehrere, insbesondere zwei, Generatoren aufweist, die mit der Gasturbine zum Aufnehmen und/oder Einbringen einer Drehbewegung mechanisch gekoppelt sind.

Generell dient der Generator zur Umwandlung einer Drehbewegung der Gasturbine in elektrische Energie, die in der Antriebsbatterie gespeichert wird. Dies betrifft einen Normalbetrieb des Stromaggregates. Der Generator ist auch als Motor betreibbar. Mit anderen Worten kann der Generator als Elektromotor betrieben werden, der die Gasturbine antreibt. Dies ist in einer Anlaufphase der Gasturbine erforderlich, um die Gasturbine in Rotation zu versetzen und somit den Gasturbinenprozess (Normalbetrieb) zu starten. Ist dies erfolgt, schaltet der Generator von dem Motorbetrieb in den Generatorbetrieb um und generiert dann elektrische Energie.

Da der Generator mit der Antriebsbatterie elektrisch verbunden ist, versorgt diese den Generator für den Motorbetrieb in der Anlaufphase der Gasturbine mit elektrischer Energie. Im Normalbetrieb nimmt die Antriebsbatterie die von dem Generator erzeugte elektrische Energie auf und speichert diese. Die Antriebsbatterie stellt die elektrische Energie einem Elektromotor zum Antreiben des Fahrzeugs zur Verfügung. Die Antriebbatterie ist dazu vorzugsweise mit dem Elektromotor verbunden. Generell ist möglich, dass die Antriebsbatterie mit mehreren Elektromotoren zum Antreiben des Fahrzeugs verbunden ist. Das erfindungsgemäße Antriebssystem kann auch mehrere Antriebsbatterien umfassen, die mit dem Generator elektrisch verbunden sind. Dies ermöglicht den Einsatz mehrere kleiner dimensionierter Batterien.

Im Betrieb saugt ein erster Verdichter der Gasturbine Verbrennungsluft an und verdichtet diese. Die Verbrennungsluft ist Luft, die aus der Umgebung der Gasturbine angesaugt wird. Anschließend wird die verdichtete Verbrennungsluft der Brennkammer zugeführt. Parallel zur Verdichtung der Verbrennungsluft erfolgt durch den Reformer die Reformierung des verdampften Kraftstoffs. Das bei der Reformierung erzeugte Synthesegas wird als gasförmiger Kraftstoff der Brennkammer zugeführt. In der Brennkammer vermischen sich die verdichtete Verbrennungsluft und der gasförmige Kraftstoff beziehungsweise das erzeugte Synthesegas zu einem Luft-/Kraftstoffgemisch, das in der Brennkammer entzündet wird. Das verbrannte Luft-/Kraftstoffgemisch strömt als Abgas anschließend in die Turbine und treibt über Turbinenschaufeln die Turbine an, mit der der zumindest eine Generator mechanisch gekoppelt ist.

Das Antriebssystem ist vorzugsweise ein serielles Hybridantriebssystem. Mit anderen Worten ist die Turbinen-Generator-Einheit in Serie mit der Antriebsbatterie und dem zumindest einem Elektromotor geschaltet. Im Betrieb treibt also die Turbinen-Generator-Einheit das Fahrzeug nicht direkt an, sondern stellt lediglich elektrische Energie bereit, die dann über die Antriebsbatterie als Pufferspeicher von dem zumindest einen Elektromotor abgerufen und in Bewegungsenergie des Fahrzeugs umgesetzt wird.

Ein weiterer Vorteil des seriellen Hybridantriebssystems besteht darin, dass durch die Turbinen-Generator-Einheit, im Unterschied zu rein elektrischen Antriebssystemen, die Antriebsbatterie kleiner ausgelegt werden kann. Da die Antriebsbatterie einen großen Teil des Gewichts des Fahrzeugs ausmacht, kann so Gewicht reduziert werden.

Für die Realisierung eines seriellen Hybridantriebssystems ist es besonders bevorzugt, wenn die Gasturbine der Turbinen-Generator-Einheit den wenigstens einen Generator ausschließlich antreibt. Wenn das Fahrzeug mit einer Turbinen-Generator-Einheit ausgestattet ist, die mehrere, insbesondere zwei, Generatoren aufweist, so kann die Gasturbine die Generatoren ausschließlich antreiben.

Die Leiteinrichtung ist den Turbinenschaufeln in Strömungsrichtung vorzugsweise direkt vorgeschaltet. Die Leiteinrichtung ist vorzugsweise am Turbineneintritt der Turbine angeordnet. Die Leiteinrichtung ist in Kraftstoffströmungsrichtung vor dem Reformer angeordnet. Die Leiteinrichtung ist bevorzugt wenigstens ein Leitgitter zur Strömungsleitung.

Die Leiteinrichtung erfüllt eine Doppelfunktion. Einerseits bringt die Leiteinrichtung die Strömung des verbrannten Luft-/Kraftstoffgemisches in einen vorbestimmten Strömungsverlauf vor dem Eintritt in die Turbine. Beispielsweise wandelt die Leiteinrichtung die potentielle Energie aus der Brennkammer in kinetische Energie um, welche dann durch die Turbine in Drehmoment umgewandelt wird. Andererseits stellt die Leiteinrichtung einen Wärmeübergang von dem heißen Abgas auf den flüssigen Kraftstoff bereit, durch den der flüssige Kraftstoff verdampft. Dazu ist die Leiteinrichtung vorzugsweise durch wenigstens einen ersten Strömungsweg mit der Brennkammer und der Turbine verbunden und die Leiteinrichtung durch wenigstens einen zweiten Strömungsweg mit einer Kraftstoffversorgung, insbesondere einem Kraftstofftank, und dem Reformer verbunden.

Die Leiteinrichtung muss im Betrieb hohen thermischen Belastungen standhalten. Um die Leiteinrichtung vor einer thermischen Überbelastung zu schützen, ist es vorgesehen, die Leiteinrichtung mit dem flüssigen Kraftstoff zu kühlen. Der flüssige Kraftstoff ist vorzugsweise flüssiges Methanol oder ein flüssiges Methanol-/Wassergemisch. Der flüssige Kraftstoff kühlt die Leiteinrichtung durch Kontakt und verdampft dabei. Dies wird auch als Verdunstungskühlung bezeichnet. Anschließend wird der verdampfte Kraftstoff dem Reformer zugeführt. Das Kühlen der Leiteinrichtung bewirkt somit die Erhöhung der Lebensdauer der Leiteinrichtung sowie das Verdampfen des flüssigen Kraftstoffs für die anschließende Synthesegasherstellung. Dieser Prozess entspricht einer thermochemischen Rekuperation.

Besonders bevorzugt weist die Leiteinrichtung eine Vielzahl von Leitschaufeln mit jeweils wenigstens einem Durchgang auf, der mit einer Zuführleitung für flüssigen und/oder vorverdampften Kraftstoff und einer Abführleitung für verdampften Kraftstoff verbunden ist. Mit anderen Worten weist jede Leitschaufel wenigstens einen Durchgang auf. Der Durchgang bildet vorzugsweise einen Wärmeübertragungsbereich zum Verdampfen des flüssigen Kraftstoffs. Der Durchgang weist bevorzugt zumindest eine Oberfläche zur Wärmeübertragung auf. Bevorzugt sind die Leitschaufeln hohl ausgebildet. Der Durchgang kann schlitzförmig sein. Der Durchgang kann zusätzlich oder alternativ durch eine Bohrung gebildet sein. Der Durchgang durch die Leitschaufeln ermöglicht einen Wärmeübergang von allen Seiten quer zur Kraftstoffströmungsrichtung. Hier ist vorteilhaft, dass eine möglichst große Fläche an den Leitschaufeln bereitgestellt ist, um Wärme vom Abgas aufzunehmen und an den durchströmenden Kraftstoff zum Verdampfen abzugeben.

Bei einer bevorzugten Ausführungsform ist der Reformer dazu angepasst, aus dem verdampften Kraftstoff, insbesondere dem verdampften Methanol, ein Synthesegas mit einem Heizwert zu erzeugen, der 10 Prozent bis 25 Prozent, insbesondere 13 Prozent bis 20 Prozent, höher als ein Heizwert des verdampften Kraftstoffs ist. Der Heizwert des Synthesegases kann 12 Prozent bis 23 Prozent, insbesondere 14 Prozent bis 21 Prozent, höher als ein Heizwert des verdampften Kraftstoffs sein. Vorzugsweise kann der Heizwert des Synthesegases 16 Prozent bis 19 Prozent, insbesondere 17 Prozent oder 18 Prozent, höher als ein Heizwert des verdampften Kraftstoffs sein.

Bei einem Synthesegas, das durch den Reformer aus verdampftem Methanol erzeugt wird, ist der Heizwert um 15 Prozent bis 18 Prozent, besonders bevorzugt um 18 Prozent bis 20 Prozent höher, als der Heizwert des verdampften Methanols vor der Reformierung.

Die Reaktionsgleichung (1. Gleichung) für Methanol zu Synthesegas lautet wie folgt:
1. Gleichung: CH₄O → 2H₂ + CO.

Bei einem Synthesegas, das durch den Reformer aus einem verdampften Methanol-/Wassergemisch erzeugt wird, ist der Heizwert um 10 Prozent bis 12 Prozent, bevorzugt um 12 Prozent bis 14 Prozent, besonders bevorzugt um 13 Prozent höher, als der Heizwert des verdampften Methanol-/Wassergemisches vor der Reformierung. Der Wasseranteil des Methanol-/Wassergemisches kann dem Methanol bereits vor der Verdampfung hinzugefügt sein oder nach der Verdampfung zugefügt werden.

Die Reaktionsgleichung (2. Gleichung) für das Methanol-/Wassergemisch zu Synthesegas lautet wie folgt:
2. Gleichung: CH₄O + H₂O → CO₂ + 3H₂.

In der nachfolgenden Tabelle (Tabelle 1) sind die Heizwerte bzw. Molgewichte der verdampften Kraftstoffe, das heißt des verdampften Methanols und verdampften Methanol-/Wassergemisches, und der daraus erzeugten Synthesegase aufgelistet. Auf Basis der darin gezeigten Heizwerte in kJ/mol (Kilojoule pro Mol) lassen sich die vorstehend beschrieben Heizwerterhöhungen in Prozent errechnen.

**Tabelle 1:**

| | Heizwert | Molgewicht | Heizwert |
|---|---|---|---|
| | [MJ/kg] | [g/mol] | [kJ/mol] |
| COH4 | 19,9 | 32 | 637 |
| CO | 10,1 | 28 | 283 |
| H2 | 120 | 2 | 240 |
| 2H2+CO | | | 763 |
| 3H2 | | | 720 |

Das Stromaggregat kann wenigstens eine Kondensationseinheit zum Erzeugen von Kondensat aus einem Abgasstrom der Gasturbine aufweisen, die abgasseitig mit der Gasturbine verbunden ist oder an der Gasturbine angeordnet ist. Die Kondensationseinheit kann abgasseitig an der Gasturbine angeordnet sein. Zusätzlich kann das Stromaggregat wenigstens eine Zuführeinheit zum Zuführen des Kondensats zu dem flüssigen und/oder verdampften Kraftstoff umfassen. Durch die Kondensationseinheit wird unter Verwendung des Abgasstroms, bestehend aus dem verbrannten Luft-/Kraftstoffgemisch, Wasser auskondensiert, das anschließend durch die Zuführeinheit dem Methanol zur Bildung eines Methanol-/Wassergemischs zugeführt werden kann. Bei dieser Ausführungsform wird also die Wärme des Abgasstromes genutzt, um Wasser für das zu reformierende verdampfte Kraftstoffgemisch zu gewinnen. Es können daher separate Komponenten zur Kondensatgewinnung entfallen, sodass die Systemkomplexität verringert ist.

Vorzugsweise weist das Stromaggregat wenigstens einen elektrischen Verdampfer zum Verdampfen des flüssigen Kraftstoffs, insbesondere in der Startphase des Stromaggregates, auf, der der Leiteinrichtung in Kraftstoffströmungsrichtung vorgeschaltet ist. In der Anlaufphase der Gasturbine weist die Leiteinrichtung eine Temperatur auf, die für eine Verdampfung des flüssigen Kraftstoffs noch nicht ausreicht. In dieser Phase kommt der elektrische Verdampfer zum Einsatz, der den flüssigen Kraftstoff in Strömungsrichtung vor der Leiteinrichtung verdampft. Im Normalbetrieb ist der elektrische Verdampfer vorzugsweise deaktiviert. Somit wird auf einfache Weise sichergestellt, dass der Gasturbinenprozess anläuft.

Bei einer Ausführungsform weist das Stromaggregat wenigstens einen zweiten Verdichter, insbesondere einen Abgasturbolader, und wenigstens einen Luftkühler auf, die in Strömungsrichtung der Verbrennungsluft zwischen dem ersten Verdichter und der Brennkammer angeordnet sind. Der Luftkühler ist vorzugsweise dem zweiten Verdichter vorgeschaltet. Der Luftkühler ist vorzugsweise ein Luft-/Luft-Kühler. Mit anderen Worten kühlt der Luftkühler die durch den ersten Verdichter verdichtete Verbrennungsluft mittels den Luftkühler durchströmender Umgebungsluft. Durch den zweiten Verdichter erfolgt nach der ersten Verdichtungsstufe durch den ersten Verdichter eine zweite Verdichtungsstufe. Mit anderen Worten ist durch die beiden Verdichter eine zweitstufige Verdichtung der Verbrennungsluft vor Eintritt in die Brennkammer gebildet. Der Luftkühler bildet eine Zwischenkühlung für die Verbrennungsluft. Durch die zweistufige Verdichtung der Verbrennungsluft mit Zwischenkühlung wird eine Wirkungsgraderhöhung der Gasturbine von zirka 10 Prozent erreicht.

Bei einer weiteren Ausführungsform weist das Stromaggregat wenigstens einen Wärmetauscher, insbesondere Abgaswärmetauscher, zum Vorwärmen von verdichteter Verbrennungsluft auf, der zwischen dem ersten Verdichter und der Brennkammer angeordnet ist. Alternativ kann der Wärmetauscher, insbesondere Abgaswärmetauscher, zum Vorwärmen von verdichteter Verbrennungsluft zwischen dem zweiten Verdichter und der Brennkammer angeordnet sein. Der Wärmetauscher ist vorzugsweise zur Wärmeübertragung mit der Gasturbine abgasseitig verbunden. Der Wärmetauscher nutzt die Temperatur des Abgasstroms bzw. des verbrannten Luft-/Kraftstoffgemisches um die verdichtete Verbrennungsluft vor Eintritt in die Brennkammer zu erwärmen. Durch diese thermische Rekuperation wird eine Wirkungsgraderhöhung der Gasturbine von 10 Prozent bis 15 Prozent erreicht.

Der Wärmetauscher ist bevorzugt dazu angepasst, die verdichtete Verbrennungsluft zumindest auf eine Zündtemperatur des durch den Reformer erzeugten Synthesegases zu erwärmen. Zusätzlich oder alternativ ist die Brennkammer dazu angepasst, die Verbrennungsluft auf eine Geschwindigkeit zu beschleunigen, die höher als eine Flammgeschwindigkeit des zu verbrennenden Synthesegases ist. Diese beiden Voraussetzungen sind erforderlich, um eine flammenlose Oxidation in der Brennkammer zu ermöglichen, die den Vorteil hat, dass annähernd keine Stickoxide bei der Verbrennung des Luft-/Kraftstoffgemisches entstehen.

Bevorzugt ist wenigstens ein Elektromotor zum Antreiben des Fahrzeugs, insbesondere Hybridfahrzeugs, vorgesehen, der mit der Antriebsbatterie verbunden ist. Der Elektromotor ist als Antriebsmotor für das Fahrzeug vorgesehen. Es ist möglich, dass mehrere Elektromotoren zum Antreiben des Fahrzeugs vorgesehen sind, die mit der Antriebsbatterie oder mehreren Antriebsbatterien elektrisch verbunden sind.

Nach einem nebengeordneten Aspekt betrifft die Erfindung ein Verfahren zum Betreiben eines Antriebssystems, insbesondere erfindungsgemäßen Antriebssystems, das wenigstens ein Stromaggregat mit wenigstens einer Gasturbine, wenigstens einem Reformer und wenigstens einem Generator, und wenigstens eine mit dem Stromaggregat elektrisch verbundene Antriebsbatterie aufweist, wobei das Verfahren folgende Schritte umfasst:
- Ansaugen von Verbrennungsluft durch wenigstens einen ersten Verdichter der Gasturbine und Verdichten der Verbrennungsluft;
- Zuführen der verdichteten Verbrennungsluft zu einer Brennkammer, die zwischen dem ersten Verdichter und einer Turbine der Gasturbine angeordnet ist;
- Verdampfen eines flüssigen Kraftstoffs, insbesondere von flüssigem Methanol, durch wenigstens eine Leiteinrichtung, die im Betrieb Wärme von einem verbrannten Luft-/Kraftstoffgemisch aus der Brennkammer aufnimmt und auf den durchströmenden Kraftstoff überträgt;
- Zuführen des verdampften Kraftstoffes zu dem Reformer, der den verdampften Kraftstoff in ein Synthesegas umwandelt und dieses der Brennkammer zuführt;
- Verbrennen des Luft-/Kraftstoffgemisches in der Brennkammer und Antreiben der Turbine der Gasturbine;
- Übertragen einer Drehbewegung von der Gasturbine auf den Generator zur Erzeugung von elektrischer Energie; und
- Speichern der elektrischen Energie in der Antriebsbatterie, die mit dem Generator elektrisch verbunden ist, um wenigstens einen Elektromotor und/oder den Generator mit elektrischer Energie zu versorgen.

Bei einer bevorzugten Ausführungsform des erfindungsgemäßen Verfahrens wird die verdichtete Verbrennungsluft vor dem Zuführen zu der Brennkammer durch wenigstens einen zweiten Verdichter, insbesondere einen Abgasturbolader, des Stromaggregates weiter verdichtet. Dabei wird vor der weiteren Verdichtung die Verbrennungsluft durch wenigstens einen Luftkühler gekühlt, der in Strömungsrichtung der Verbrennungsluft zwischen dem ersten Verdichter und dem zweiten Verdichter angeordnet ist.

Bei einer Ausführungsform des erfindungsgemäßen Verfahrens umfasst das Antriebssystem einen Wärmetauscher, der die verdichtete Verbrennungsluft zumindest auf eine Zündtemperatur des durch den Reformer erzeugten Synthesegases erwärmt.

Bei einer weiteren Ausführungsform des erfindungsgemäßen Verfahrens beschleunigt die Brennkammer die Verbrennungsluft auf eine Geschwindigkeit, die höher als eine Flammgeschwindigkeit des zu verbrennenden Synthesegases ist.

Nach einem weiteren nebengeordneten Aspekt betrifft die Erfindung ein Fahrzeug, insbesondere Hybridfahrzeug, mit wenigstens einem erfindungsgemäßen Antriebssystem und wenigstens einem Elektromotor, der mit der Antriebsbatterie des Antriebssystems zum Antreiben des Fahrzeugs verbunden ist.

Nach einem weiteren nebengeordneten Aspekt betrifft die Erfindung die Verwendung wenigstens eines erfindungsgemäßen Antriebssystems in einem Fahrzeug, wobei das Stromaggregat elektrische Energie erzeugt und die Antriebsbatterie die elektrische Energie speichert, wobei die Antriebsbatterie mit wenigstens einem Elektromotor zum Antreiben des Fahrzeugs verbunden ist. Das Fahrzeug kann ein Personenkraftwagen (PKW) und/oder ein Lastkraftfahrzeug (LKW) und/oder einen Omnibus sein. Alternativ kann das erfindungsgemäße Antriebssystem in einem Fluggerät und/oder einem Boot verwendet werden.

Zu den Vorteilen des Verfahrens, des Fahrzeugs und der Verwendung wird auf die im Zusammenhang mit dem Antriebssystem erläuterten Vorteile verwiesen. Darüber hinaus können das Verfahren und das Fahrzeug alternativ oder zusätzlich einzelne oder eine Kombination mehrerer zuvor in Bezug auf das Antriebssystem genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Antriebssystem ausgestaltet sein kann.

In diesen zeigen,
- Fig. 1: eine schematische Darstellung eines Antriebssystems nach einem bevorzugten erfindungsgemäßen Ausführungsbeispiel;
- Fig. 2: eine perspektivische Darstellung einer Leiteinrichtung des Antriebssystems nach Fig. 1;
- Fig. 3: einen Teilschnitt einer Turbine mit eingesetzter Leiteinrichtung des Antriebssystems nach Fig. 1;
- Fig. 4: eine schematische Darstellung eines Antriebssystems nach einem weiteren erfindungsgemäßen Ausführungsbeispiel; und
- Fig. 5: eine schematische Darstellung eines Antriebssystems nach einem weiteren erfindungsgemäßen Ausführungsbeispiel.

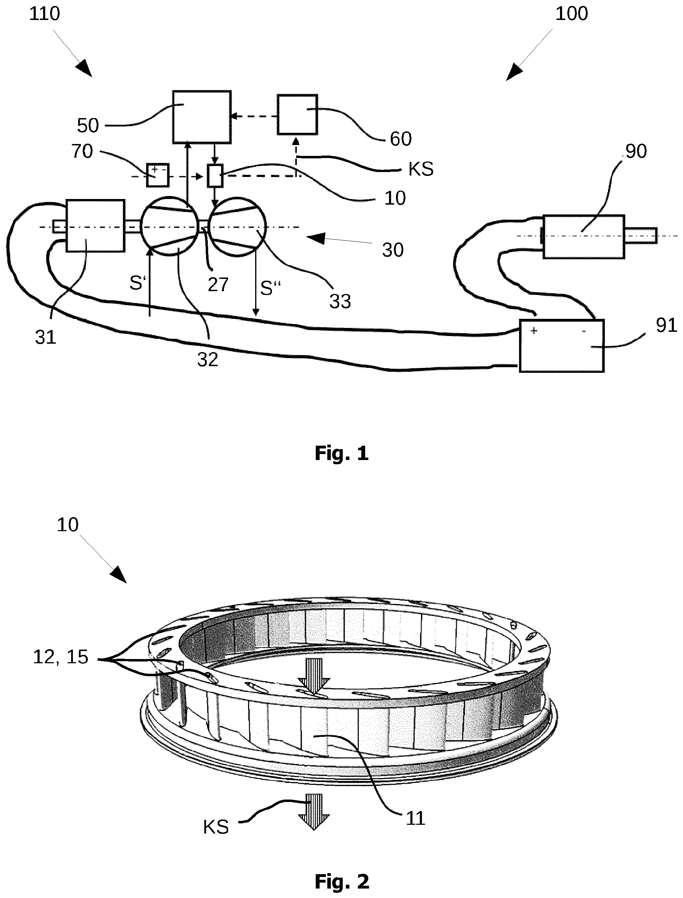

Fig. 1 zeigt ein Antriebssystem 100 nach einem bevorzugten erfindungsgemäßen Ausführungsbeispiel, das zum Antreiben eines Fahrzeugs konzipiert ist. Das Antriebssystem 100 umfasst ein Stromaggregat 110 und eine Antriebsbatterie 91, die einen Elektromotor 90 zum Antreiben des Fahrzeugs mit elektrischer Energie versorgt. Bevorzugt kommt das Antriebssystem 100 in Hybridfahrzeugen, wie zum Beispiel einem Personenkraftwagen, Lastkraftwagen, Omnibus, Boot und/oder Fluggerät zum Einsatz. Auch der Einsatz in Land- und/oder Baumaschinen ist möglich. Andere Anwendungsfälle für das Antriebssystem 100 sind denkbar.

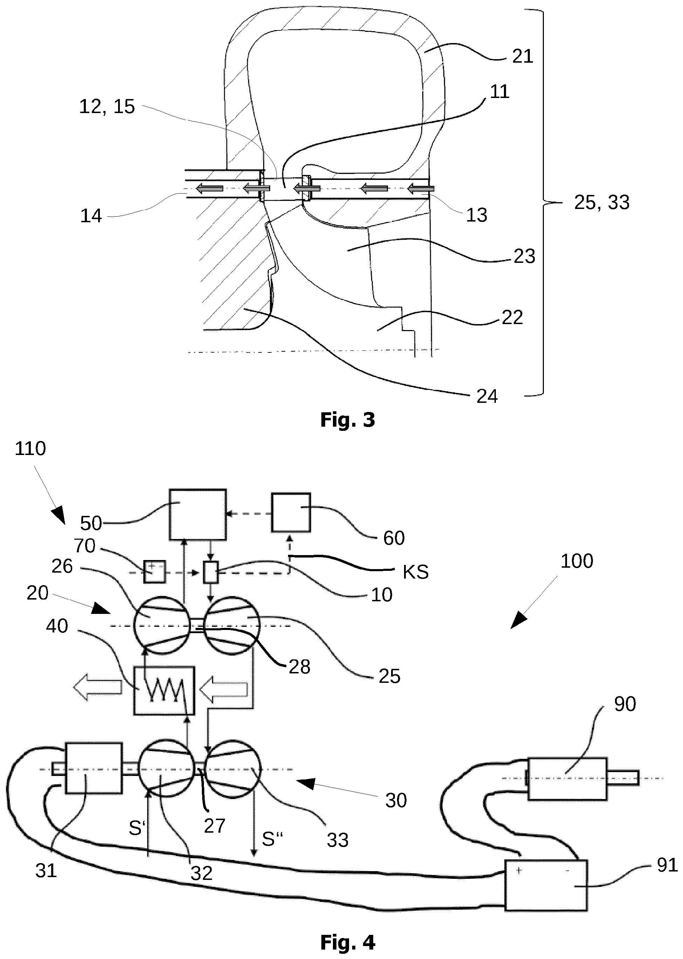

Das Stromaggregat 110 weist eine Gasturbine 30, einen mit der Gasturbine 30 mechanisch gekoppelten Generator 31 und einen Reformer 60 auf. Die Gasturbine 30 umfasst einen ersten Verdichter 32 zum Verdichten von angesaugter Verbrennungsluft und eine Turbine 33 zum Antreiben des ersten Verdichters 32. Gemäß Fig. 3 ist die Turbine 33 eine Radialturbine. Zwischen dem ersten Verdichter 32 und der Turbine 33 ist eine Brennkammer 50 angeordnet, die mit dem ersten Verdichter 32 und der Turbine 33 fluidverbunden ist. Mit anderen Worten ist der erste Verdichter 32 der Brennkammer 50 in einer Strömungsrichtung S' der Verbrennungsluft vorgeschaltet. Die Brennkammer 50 dient zum Verbrennen eines Luft-/Kraftstoffgemisches, das aus zugeführter Verbrennungsluft und zugeführtem Synthesegas besteht. Die Turbine 33 ist der Brennkammer 50 in einer Strömungsrichtung S" der verbrannten Luft-/Kraftstoffgemisches nachgeschaltet.

Das Synthesegas wird durch den Reformer 60 erzeugt, wobei dafür ein verdampfter Kraftstoff dem Reformer 60 zugeführt wird. Der Reformer 60 dient zum Reformieren des verdampften Kraftstoffs zu Synthesegas, um einen Heizwert für die Verbrennung zu erhöhen. Der Reformer 60 ist zum Zuführen des erzeugten Synthesegases mit der Brennkammer 50 verbunden. Auf das Synthesegas sowie den Reformer 60 wird später näher eingegangen.

Der Generator 31 ist mit der Gasturbine 30 derart verbunden, dass dieser eine Drehbewegung im Betrieb aufnimmt und in elektrische Energie umwandelt. Dies stellt den Normalbetrieb des Generators 31 dar. Der Generator 31 ist mit der Antriebsbatterie 91 elektrisch verbunden. Wie in Fig. 1 erkennbar, ist die Antriebsbatterie 91 durch elektrische Leitungen mit einem Elektromotor 90 verbunden, um diesen mit elektrischer Energie zum Antreiben des Fahrzeugs zu versorgen.

Der Generator 31 ist auch als Motor betreibbar. Mit anderen Worten kann der Generator 31 als Elektromotor betrieben werden, der die Gasturbine 30 antreibt. Dabei kann eine Vorverdampfung des flüssigen Kraftstoffs durch einen elektrischen Verdampfer 70 erreicht werden. Dies ist in einer Anlaufphase der Gasturbine 30 zweckmäßig, um die Gasturbine 33 in Rotation zu versetzen und dadurch in den Normalbetrieb zu überführen. Ist dies erfolgt, schaltet der Generator 31 von dem Motorbetrieb in den Generatorbetrieb um und generiert dann elektrische Energie.

Der Generator 31 kann mit der Turbine 33, konkret mit einer Turbinenwelle 27 der Turbine 33 direkt verbunden sein, um die Drehbewegung der Gasturbine 30 aufzunehmen. Es ist aber auch möglich, dass zwischen der Gasturbine 30 und dem Generator 31 ein Getriebe zwischengeschaltet ist, um die Drehzahl der Turbinenwelle 27 zu übersetzen. Mit anderen Worten kann der Generator 31 mit der Turbinenwelle 27 der Turbine 33 zur Aufnahme der Drehbewegung indirekt verbunden sein.

Wie in Fig. 2 und 3 zu sehen ist, weist die Gasturine 30 eine Leiteinrichtung 10 zur Strömungsleitung auf, die der Turbine 33 vorgeschaltet ist. Die Leiteinrichtung 10 ist in Strömungsrichtung S" des verbrannten Luft-/Kraftstoffgemisches zwischen der Brennkammer 50 und der Turbine 33 geschaltet. Konkret ist die Leiteinrichtung 10 an einem Eintritt der Turbine 33 angeordnet. Die Leiteinrichtung 10 leitet eine Strömung des verbrannten Luft-/Kraftstoffgemisches in einem vorbestimmten Strömungsverlauf zu Turbinenschaufeln 23 der Turbine 33. Die Leiteinrichtung 10 ist in Fig. 2 zur besseren Illustration im unverbauten Zustand dargestellt. Auf die Ausgestaltung der Leiteinrichtung 10 wird später näher eingegangen.

Gemäß Fig. 3 ist die Leiteinrichtung 10, insbesondere im verbauten Zustand, zwischen einer Turbinenvolute 21 und einem Turbinenrad 22 der Turbine 33 angeordnet ist. Das Turbinenrad 22 weist die Turbinenschaufeln 23 auf und rotiert im Betrieb in einem Lagerträger 24, der in Fig. 3 gut ersichtlich ist. Durch die Turbinenvolute 21 strömt das verbrannte Luft-/Kraftstoffgemisch zu der Leiteinrichtung 10 und anschließend zu den Turbinenschaufeln 23 der Turbine 33.

In Fig. 3 ist des Weiteren eine Zuführleitung 13 zum Zuführen von flüssigem bzw. vorverdampftem Kraftstoff zu der Leiteinrichtung 10 und eine Abführleitung 14 für verdampften Kraftstoff ersichtlich. Die Abführleitung 14 verbindet die Leiteinrichtung 10 mit dem Reformer 60. Die Zuführleitung 13 ist mit einem elektrischen Verdampfer 70 verbunden, der in der Anlaufphase bzw. in der Startphase des Gasturbinenprozesses den flüssigen Kraftstoff vorverdampft. Der elektrische Verdampfer 70 ist der Leiteinrichtung 10 in Kraftstoffströmungsrichtung KS vorgeschaltet.

Die Leiteinrichtung 10 ist des Weiteren dem Reformer 60 vorgeschaltet. Wie in Fig. 1 erkennbar, ist die Leiteinrichtung 10 in Kraftstoffströmungsrichtung KS zwischen dem elektrischen Verdampfer 70 und dem Reformer 60 angeordnet. Die Leiteinrichtung 10 leitet im Betrieb, insbesondere im Normalbetrieb und in der Anlaufphase, die Strömung des verbrannten Luft-/Kraftstoffgemisches, insbesondere des Abgases, zur Turbine 33 und führt Kraftstoff zu dem Reformer 60. Die Leiteinrichtung 10 weist daher einen ersten Strömungsweg für das verbrannte Luft-/Kraftstoffgemisch und einen zweiten Strömungsweg für Kraftstoff auf.

Gemäß Fig. 2 ist die Leiteinrichtung 10 ringförmig ausgebildet und weist eine Vielzahl von Leitschaufeln 11 auf. Die Leitschaufeln 11 sind in Umfangsrichtung der ringförmigen Leiteinrichtung gleichmäßig verteilt angeordnet. Die Leitschaufeln 11 sind jeweils zu benachbarten Leitschaufeln 11 beabstandet, sodass im Betrieb das verbrannte Luft-/Kraftstoffgemisch zwischen den Leitschaufeln 11 hindurchströmt.

Wie in Fig. 2 gut erkennbar ist, weisen die Leitschaufeln 11 jeweils einen Durchgang 12 auf. Mit anderen Worten sind die Leitschaufeln 11 hohl ausgebildet. Der Durchgang 12 bildet einen Strömungskanal für zu verdampfenden Kraftstoff oder für vorverdampften Kraftstoff. Der Durchgang 12 kann durch einen Schlitz gebildet sein. Der Durchgang 12 kann zusätzlich oder alternativ durch ein oder mehrere Bohrungen gebildet sein. Andere Formen des Durchgangs 12 sind möglich. Generell ist denkbar, dass die Leitschaufeln 11 alternativ mehrere Durchgänge 12 für den zu verdampfenden Kraftstoff oder für vorverdampften Kraftstoff aufweisen können.

Der Durchgang 12 bildet einen Wärmeübertragungsbereich 15 (siehe Fig. 3), in dem im Betrieb ein Wärmeübergang von den Leitschaufeln 11 auf den durchströmenden Kraftstoff erfolgt. Der Wärmeübertragungsbereich 15 umfasst eine Innenfläche des Durchgangs 12. Der Durchgang 12 verläuft quer zur Umfangsrichtung der Leiteinrichtung 10 durch die Leitschaufeln 11. Mit anderen Worten verläuft der Durchgang 12 quer zur Strömungsrichtung S" des verbrannten Luft-/Kraftstoffgemisches. Oder anders gesagt, verläuft der Durchgang 12 in einer Längsrichtung der Leiteinrichtung 10. Gemäß Fig. 2 bildet die Leiteinrichtung 10 ein Leitgitter.

Bei diesem konkreten Ausführungsbeispiel kommt als flüssiger Kraftstoff Methanol oder ein Methanol-/Wassergemisch zum Einsatz. Das heißt, der verdampfte Kraftstoff ist verdampftes Methanol oder ein verdampftes Methanol-/Wassergemisch.

Bei dem Durchströmen des flüssigen Kraftstoffs erfolgt im Normalbetrieb, d.h. wenn die Betriebstemperatur der Leiteinrichtung 10 erreicht ist, ein Verdampfen des Kraftstoffs. Durch diesen Prozess wird die Leiteinrichtung 10 gekühlt und so vor einer thermischen Überbelastung geschützt. Der verdampfte Kraftstoff wird anschließend durch die Abführleitung 14 zu dem Reformer 60 geführt.

Der Reformer 60 ist dazu angepasst, aus dem verdampften Methanol beziehungsweise dem verdampften Methanol-/Wassergemisch ein Synthesegas mit einem Heizwert zu erzeugen, der 10 Prozent bis 25 Prozent höher als ein Heizwert des verdampften Edukts ist.

Bei einem Synthesegas, das durch den Reformer 60 aus verdampftem Methanol erzeugt wird, ist der Heizwert um 15 Prozent bis 18 Prozent, besonders bevorzugt um 18 Prozent bis 20 Prozent höher, als der Heizwert des verdampften Methanols vor der Reformierung. Die Reaktionsgleichung für Methanol zu Synthesegas lautet wie folgt: CH₄O → 2H₂ + CO.

Bei einem Synthesegas, das durch den Reformer aus einem verdampften Methanol-/Wassergemisch erzeugt wird, ist der Heizwert um 10 Prozent bis 12 Prozent, bevorzugt um 12 Prozent bis 14 Prozent, besonders bevorzugt um 13 Prozent höher, als der Heizwert des verdampften Methanol-/Wassergemisches vor der Reformierung. Die Reaktionsgleichung für das Methanol-/Wassergemisch zu Synthesegas lautet wie folgt: CH₄O + H₂O → CO₂ + 3H₂.

Der Wasseranteil für das Methanol-/Wassergemisch kann dem Methanol bereits vor der Leiteinrichtung 10 hinzugefügt sein oder nach der Leiteinrichtung 10 zugefügt werden.

Um den Wasseranteil bereitzustellen, kann das Stromaggregat 110 eine Kondensationseinheit zum Erzeugen von Kondensat aus einem Abgasstrom der Gasturbine 30 aufweisen. Die nicht dargestellte Kondensationseinheit ist vorzugsweise abgasseitig mit der Gasturbine 30 verbunden und/oder an der Gasturbine 30 abgasseitig angeordnet ist. Zusätzlich kann das Stromaggregat 110 eine nicht dargestellte Zuführeinheit zum Zuführen des Kondensats zu dem flüssigen und/oder verdampften Kraftstoff umfassen.

Gemäß Fig. 4 ist ein Antriebssystem 100 nach einem weiteren erfindungsgemäßen Ausführungsbeispiel gezeigt, wobei nachfolgend lediglich auf die Unterschiede zu dem Antriebssystem 100 gemäß Fig. 1 bis 3 eingegangen wird.

Das Stromaggregat 110 des Antriebssystems 100 gemäß Fig. 4 umfasst zusätzlich einen Abgasturbolader 20 und einen Luftkühler 40. Der Abgasturbolader 20 weist einen zweiten Verdichter 26 und eine Turbine 25 auf, die den zweiten Verdichter 26 antreibt. Die Turbine 25 ist mit dem zweiten Verdichter 26 mechanisch gekoppelt. Konkret sind der zweite Verdichter 26 und die Turbine 25 zur Übertragung einer Drehbewegung über eine gemeinsame Welle 28 miteinander verbunden.

Der zweite Verdichter 26 und der Luftkühler 40 sind in Strömungsrichtung S' der Verbrennungsluft zwischen dem ersten Verdichter 32 und der Brennkammer 50 angeordnet. Mit anderen Worten sind der zweite Verdichter 26 und der Luftkühler 40 dem ersten Verdichter 32 in Strömungsrichtung S' nachgeschaltet und der Brennkammer 50 vorgeschaltet. Bei dem Stromaggregat 110 gemäß Fig. 4 bildet somit der erste Verdichter 32 eine erste Verdichterstufe zum Verdichten der Verbrennungsluft und der nachgeschaltete zweite Verdichter 26 eine zweite Verdichterstufe zum weiteren Verdichten der Verbrennungsluft. Zwischen den beiden Verdichtern 32, 26 erfolgt durch den Luftkühler 40 eine Zwischenkühlung der verdichteten Verbrennungsluft. Der Luftkühler 40 ist ein Luft/Luft-Kühler. Das heißt, dass der Luftkühler 40 zur Kühlung der Verbrennungsluft mit Luft, beispielsweise Umgebungsluft, durchströmt wird, um einen Wärmeabführung zu realisieren. Das Stromaggregat 110 gemäß Fig. 4 umfasst somit eine zweistufige Verdichtung der Verbrennungsluft mit Zwischenkühlung vor Eintritt in die Brennkammer 50.

Die Turbine 25 des Abgasturboladers 20 ist in Strömungsrichtung S" des verbrannten Luft-/Kraftstoffgemisches zwischen der Leiteinrichtung 10 und der Turbine 33 der Gasturbine 30 angeordnet. Bei dem Stromaggregat 110 gemäß Fig. 4 ist die Leiteinrichtung 10 an der Turbine 25 des Abgasturboladers 20 vorgesehen und nicht, wie in Fig. 1 gezeigt, an der Turbine 33 der Gasturbine 30. Dennoch wird hinsichtlich der Leiteinrichtung 10 gemäß Fig. 4 auf die Beschreibung zur Leiteinrichtung 10 gemäß Fig. 1 bis 3 verwiesen. Die Anordnung der Leiteinrichtung 10 an der Turbine 25 entspricht der Anordnung der Leiteinrichtung 10 an der Turbine 33 gemäß Fig. 1 und 3. Die Ausgestaltung sowie Funktion der Leiteinrichtung 10 gemäß Fig. 4 ist dieselbe wie anhand Fig. 1 bis 3 beschrieben.

Zusätzlich oder alternativ kann die Leiteinrichtung 10 an der Turbine 33 angeordnet sein. Mit anderen Worten ist es möglich, dass bei dem Stromaggregat 110 insgesamt zwei Leiteinrichtungen 10 vorgesehen sein können, wobei jeweils eine der Leiteinrichtungen 10 an einer der Turbinen 25, 33 angeordnet ist. Gemäß Fig. 4 ist die Leiteinrichtung 10 nur an der Turbine 25 des Abgasturboladers 20 angeordnet. Dies ist in Fig. 3 gut erkennbar.

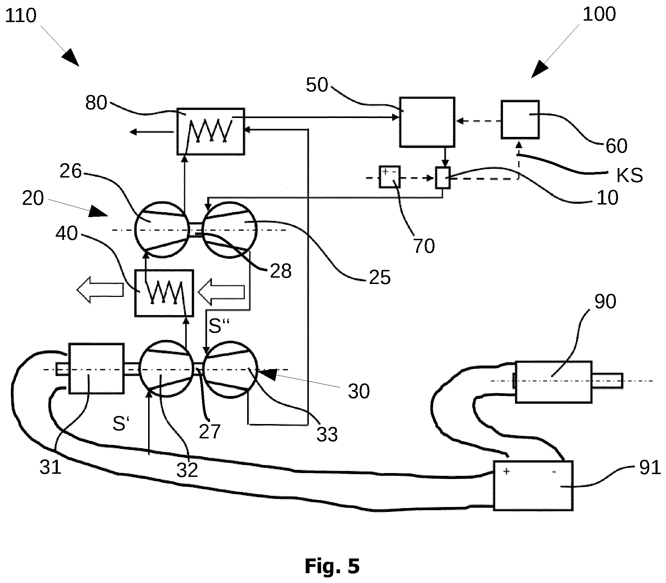

Fig. 5 zeigt ein Antriebssystem 100 nach einem weiteren erfindungsgemäßen Ausführungsbeispiel, bei dem das Antriebssystem gemäß Fig. 4 mit einem Wärmetauscher 80 zum Vorwärmen der Verbrennungsluft ergänzt ist.

Bei dem Stromaggregat 110 gemäß Fig. 5 ist der Wärmetauscher 80 der Brennkammer 50 vorgeschaltet. Konkret ist der Wärmetauscher 80 in Strömungsrichtung S' der Verbrennungsluft zwischen dem zweiten Verdichter 26 des Abgasturboladers 20 und der Brennkammer 50 angeordnet. Der Wärmetauscher 8 ist dazu angepasst, die verdichtete Verbrennungsluft auf eine Zündtemperatur des durch den Reformer 60 erzeugten Synthesegases zu erwärmen.

Der Wärmetauscher 80 ist mit der Turbine 33 abgasseitig verbunden. Ferner ist der Wärmetauscher 80 mit dem zweiten Verdichter 26 verbunden. Der Wärmetauscher 80 wird mit dem verbrannten Luft-/Kraftstoffgemisch bzw. dem Abgas aus der Turbine 33 durchströmt und erwärmt dadurch die verdichtete Verbrennungsluft. Der Wärmetauscher 80 führt somit eine Erwärmung der Verbrennungsluft mittels thermischer Rekuperation unter Nutzung des aus der Turbine 33 strömenden Abgases.

Bei dem Stromaggregat 110 gemäß Fig. 5 ist die Brennkammer 50 dazu angepasst, die Verbrennungsluft auf eine Geschwindigkeit zu beschleunigen, die höher als eine Flammgeschwindigkeit des zu verbrennenden Synthesegases ist. Dadurch kann in der Brennkammer 50 die Verbrennung des Luft-/Kraftstoffgemisches mittels flammenloser Oxidation erfolgen. Dabei ist vorteilhaft, dass annähernd keine Stickoxide anfallen und somit ein verbesserter, klimafreundlicher Betrieb des Antriebssystems 100 ermöglicht wird.

Abschließend wird darauf hingewiesen, dass die Merkmale der beiden beschriebenen Ausführungsbeispiele nicht auf die einzelnen Ausführungsbeispiele beschränkt, sondern frei untereinander kombinierbar sind.

### Bezugszeichenliste

- 10: Leiteinrichtung
- 11: Leitschaufeln
- 12: Durchgang
- 13: Zuführleitung
- 14: Abführleitung
- 15: Wärmeübertragungsbereich
- 20: Abgasturbolader
- 21: Turbinenvolute
- 22: Turbinenrad
- 23: Turbinenschaufeln
- 24: Lagerträger
- 25: Turbine
- 26: zweiter Verdichter
- 27: Turbinenwelle
- 28: gemeinsame Welle
- 30: Gasturbine
- 31: Generator
- 32: erster Verdichter
- 33: Turbine
- 40: Luftkühler
- 50: Brennkammer
- 60: Reformer
- 70: elektrischer Verdampfer
- 80: Wärmetauscher
- 90: Elektromotor
- 91: Antriebsbatterie
- 100: Antriebssystem
- 110: Stromaggregat
- KS: Kraftstoffströmungsrichtung
- S': Strömungsrichtung der Verbrennungsluft
- S": Strömungsrichtung des verbrannten Luft-/Kraftstoffgemischs

## Patentansprüche

1. Antriebssystem (100) für ein Fahrzeug, insbesondere für ein Hybridfahrzeug, mit wenigstens einem Stromaggregat (110) und wenigstens einer Antriebsbatterie (91), die miteinander elektrisch gekoppelt sind, wobei das Stromaggregat (110) umfasst:
- wenigstens eine Gasturbine (30), die wenigstens einen ersten Verdichter (32) zum Verdichten von angesaugter Verbrennungsluft, wenigstens eine Turbine (33) zum Antreiben des ersten Verdichters (32) und wenigstens eine dazwischen angeordnete Brennkammer (50) zum Verbrennen eines Luft-/Kraftstoffgemisches aufweist, die mit dem ersten Verdichter (32) und der Turbine (33) fluidverbunden ist;
- wenigstens einen Reformer (60) zum Reformieren eines verdampften Kraftstoffes, insbesondere von verdampftem Methanol, zu einem Synthesegas, wobei der Reformer (60) mit der Brennkammer (50) zum Zuführen des Synthesegases verbunden ist; und
- wenigstens einen Generator (31), der mit der Gasturbine (30) zum Aufnehmen und/oder Einbringen einer Drehbewegung mechanisch gekoppelt ist,
wobei die Antriebsbatterie (91) mit dem Generator (31) des Stromaggregates (110) elektrisch verbunden und dazu angepasst ist, wenigstens einen Elektromotor (90) zum Antreiben des Fahrzeugs und/oder den Generator (31) mit elektrischer Energie zu versorgen,
**dadurch gekennzeichnet, dass**
die Gasturbine (30) wenigstens eine Leiteinrichtung (10) zur Strömungsleitung des verbrannten Luft-/Kraftstoffgemisches umfasst, die in Strömungsrichtung (S") zwischen der Brennkammer (50) und der Turbine (33) angeordnet ist, wobei die Leiteinrichtung (10) dem Reformer (60) in einer Kraftstoffströmungsrichtung (KS) vorgeschaltet und dazu angepasst ist, im Betrieb Wärme von dem verbranntem Luft-/Kraftstoffgemisch aufzunehmen und durch Wärmeübertragung einen flüssigen Kraftstoff, insbesondere flüssiges Methanol, zu verdampfen.

2. Antriebssystem (100) nach Anspruch 1,
**dadurch gekennzeichnet, dass**
die Leiteinrichtung (10) eine Vielzahl von Leitschaufeln (11) mit jeweils wenigstens einem Durchgang (12) aufweist, der mit einer Zuführleitung (13) für flüssigen und/oder vorverdampften Kraftstoff und einer Abführleitung (14) für verdampften Kraftstoff verbunden ist, wobei der Durchgang (12) einen Wärmeübertragungsbereich (15) zum Verdampfen des flüssigen Kraftstoffs bildet.

3. Antriebssystem (100) nach einem der vorhergehenden Ansprüche,
**dadurch gekennzeichnet, dass**
der Reformer (60) dazu angepasst ist, aus dem verdampften Kraftstoff, insbesondere dem verdampften Methanol, ein Synthesegas mit einem Heizwert zu erzeugen, der 10 Prozent bis 25 Prozent, insbesondere 13 Prozent bis 20 Prozent, höher als ein Heizwert des verdampften Kraftstoffs ist.

4. Antriebssystem (100) nach einem der vorhergehenden Ansprüche,
**dadurch gekennzeichnet, dass**
das Stromaggregat (110) wenigstens eine Kondensationseinheit zum Erzeugen von Kondensat aus einem Abgasstrom der Gasturbine (30) aufweist, die abgasseitig mit der Gasturbine (30) verbunden ist oder an der Gasturbine (30) angeordnet ist, und das Stromaggregat (110) wenigstens eine Zuführeinheit zum Zuführen des Kondensats zu dem flüssigen und/oder verdampften Kraftstoff umfasst.

5. Antriebssystem (100) nach einem der vorhergehenden Ansprüche,
**dadurch gekennzeichnet, dass**
das Stromaggregat (110) wenigstens einen elektrischen Verdampfer (70) zum Verdampfen des flüssigen Kraftstoffs, insbesondere in der Startphase des Stromaggregates (110), aufweist, der der Leiteinrichtung (10) in Kraftstoffströmungsrichtung (KS) vorgeschaltet ist.

6. Antriebssystem (100) nach einem der vorhergehenden Ansprüche,
**dadurch gekennzeichnet, dass**
das Stromaggregat (110) wenigstens einen zweiten Verdichter (26), insbesondere einen Abgasturbolader (20), und wenigstens einen Luftkühler (40) aufweist, die in Strömungsrichtung (S') der Verbrennungsluft zwischen dem ersten Verdichter (32) und der Brennkammer (50) angeordnet sind, wobei der Luftkühler (40) dem zweiten Verdichter (26) vorgeschaltet ist.

7. Antriebssystem (100) nach einem der vorhergehenden Ansprüche, insbesondere nach Anspruch 6,
**dadurch gekennzeichnet, dass**
das Stromaggregat (110) wenigstens einen Wärmetauscher (80), insbesondere Abgaswärmetauscher, zum Vorwärmen von verdichteter Verbrennungsluft aufweist, der zwischen dem/einem zweiten Verdichter (26) und/oder dem ersten Verdichter (32) und der Brennkammer (50) angeordnet ist, wobei der Wärmetauscher (80) zur Wärmeübertragung mit der Gasturbine (30) abgasseitig verbunden ist.

8. Antriebssystem (100) nach einem der vorhergehenden Ansprüche,
**dadurch gekennzeichnet, dass**
wenigstens ein Elektromotor (90) zum Antreiben des Fahrzeugs, insbesondere Hybridfahrzeugs vorgesehen ist, der mit der Antriebsbatterie (91) verbunden ist.

9. Verfahren zum Betreiben eines Antriebssystems (100), insbesondere nach einem der vorhergehenden Ansprüche, das wenigstens ein Stromaggregat (110) mit wenigstens einer Gasturbine (30), wenigstens einem Reformer (60) und wenigstens einem Generator (31), und wenigstens eine mit dem Stromaggregat (110) elektrisch verbundene Antriebsbatterie (91) aufweist, wobei das Verfahren folgende Schritte umfasst:
- Ansaugen von Verbrennungsluft durch wenigstens einen ersten Verdichter (32) der Gasturbine (30) und Verdichten der Verbrennungsluft;
- Zuführen der verdichteten Verbrennungsluft zu einer Brennkammer (50), die zwischen dem ersten Verdichter (32) und einer Turbine (33) der Gasturbine (30) angeordnet ist;
- Verdampfen eines flüssigen Kraftstoffs, insbesondere von flüssigem Methanol, durch wenigstens eine Leiteinrichtung (10), die im Betrieb Wärme von einem verbrannten Luft-/Kraftstoffgemisch aus der Brennkammer (50) aufnimmt und auf den durchströmenden Kraftstoff überträgt;
- Zuführen des verdampften Kraftstoffes zu dem Reformer (60), der den verdampften Kraftstoff in ein Synthesegas umwandelt und dieses der Brennkammer (50) zuführt;
- Verbrennen des Luft-/Kraftstoffgemisches in der Brennkammer (50) und Antreiben der Turbine (33) der Gasturbine (30);
- Übertragen einer Drehbewegung von der Gasturbine (30) auf den Generator (31) zur Erzeugung von elektrischer Energie; und
- Speichern der elektrischen Energie in der Antriebsbatterie (91), die mit dem Generator (31) elektrisch verbunden ist, um wenigstens einen Elektromotor (90) und/oder den Generator (31) mit elektrischer Energie zu versorgen.

10. Verfahren nach Anspruch 9,
**dadurch gekennzeichnet, dass**
die verdichtete Verbrennungsluft vor dem Zuführen zu der Brennkammer (50) durch wenigstens einen zweiten Verdichter (26), insbesondere einen Abgasturbolader (20), des Stromaggregates (110) weiter verdichtet wird, wobei vor der weiteren Verdichtung die Verbrennungsluft durch wenigstens einen Luftkühler (40) gekühlt wird, der in Strömungsrichtung (S') der Verbrennungsluft zwischen dem ersten Verdichter (32) und dem zweiten Verdichter (26) angeordnet ist.

11. Verfahren nach Anspruch 9 oder 10,
**dadurch gekennzeichnet, dass**
das Antriebssystem einen Wärmetauscher (80) umfasst, der die verdichtete Verbrennungsluft zumindest auf eine Zündtemperatur des durch den Reformer (60) erzeugten Synthesegases erwärmt.

12. Verfahren nach einem der Ansprüche 9 bis 11,
**dadurch gekennzeichnet, dass**
die Brennkammer (50) die Verbrennungsluft auf eine Geschwindigkeit beschleunigt, die höher als eine Flammgeschwindigkeit des zu verbrennenden Synthesegases ist.

13. Fahrzeug, insbesondere Hybridfahrzeug, mit wenigstens einem Antriebssystem (100) nach einem der Ansprüche 1 bis 8 und wenigstens einem Elektromotor (90), der mit der Antriebsbatterie (91) des Antriebssystems (100) zum Antreiben des Fahrzeugs verbunden ist.

14. Verwendung wenigstens eines Antriebssystems (100) nach einem der Ansprüche 1 bis 8 in einem Fahrzeug, insbesondere einem Personenkraftfahrzeug und/oder einem Lastkraftfahrzeug und/oder einem Omnibus, einem Fluggerät und/oder einem Boot, wobei das Stromaggregat (110) elektrische Energie erzeugt und die Antriebsbatterie (91) die elektrische Energie speichert, wobei die Antriebsbatterie (91) mit wenigstens einem Elektromotor (90) zum Antreiben des Fahrzeugs verbunden ist.

## Claims

1. A drive system (100) for a vehicle, in particular for a hybrid vehicle, with at least one power unit (110) and with at least one drive battery (91), which are electrically coupled to one another, wherein the power unit (110) comprises:
- at least one gas turbine (30), which has at least a first compressor (32) for the compressing of drawn-in combustion air, at least one turbine (33) for driving the first compressor (32), and at least one combustion chamber (50) arranged therebetween, for the combustion of an air/fuel mixture, which is fluidically connected to the first compressor (32) and to the turbine (33);
- at least one reformer (60) for the reforming of a vaporized fuel, in particular of vaporized methanol, to a synthesis gas, wherein the reformer (60) is connected to the combustion chamber (50) for the supplying of the synthesis gas; and
- at least one generator (31), which is mechanically coupled with the gas turbine (30) for receiving and/or introducing a rotary movement,
wherein the drive battery (91) is electrically connected to the generator (31) of the power unit (110) and is adapted to supply with electrical energy at least one electric motor (90) for driving the vehicle and/or the generator (31),
**characterized in that**
the gas turbine (30) comprises at least one guiding device (10) for guiding the flow of the combusted air/fuel mixture, which is arranged in flow direction (S") between the combustion chamber (50) and the turbine (33), wherein the guiding device (10) is arranged upstream of the reformer (60) in a fuel flow direction (KS) and is adapted to receive, in operation, heat from the combusted air/fuel mixture and to vaporize a liquid fuel, in particular liquid methanol, through heat transfer.

2. The drive system (100) according to Claim 1,
**characterized in that**
the guiding device (10) has a plurality of guide blades (11) with respectively at least one passage (12) which is connected to a feed line (13) for liquid and/or pre-vaporized fuel, and to a discharge line (14) for vaporized fuel, wherein the passage (12) forms a heat transfer zone (15) for vaporizing the liquid fuel.

3. The drive system (100) according to any one of the preceding claims,
**characterized in that**
the reformer (60) is adapted to generate from the vaporized fuel, in particular from the vaporized methanol, a synthesis gas with a heating value which is 10 percent to 25 percent, in particular 13 percent to 20 percent, higher than a heating value of the vaporized fuel.

4. The drive system (100) according to any one of the preceding claims,
**characterized in that**
the power unit (110) has at least one condensation unit for generating condensate from an exhaust gas flow of the gas turbine (30), which is connected to the gas turbine (30) on the exhaust gas side or is arranged on the gas turbine (30), and the power unit (110) has at least one feed unit for feeding the condensate to the liquid and/or vaporized fuel.

5. The drive system (100) according to any one of the preceding claims,
**characterized in that**
the power unit (110) has at least one electric vaporizer (70) for vaporizing the liquid fuel, in particular in the start phase of the power unit (110), which is arranged upstream of the guiding device (10) in the fuel flow direction (KS).

6. The drive system (100) according to any one of the preceding claims,
**characterized in that**
the power unit (110) has at least a second compressor (26), in particular an exhaust gas turbocharger (20), and at least one air cooler (40), which are arranged in flow direction (S') of the combustion air between the first compressor (32) and the combustion chamber (50), wherein the air cooler (40) is arranged upstream of the second compressor (26).

7. The drive system (100) according to any one of the preceding claims, in particular according to Claim 6,
**characterized in that**
the power unit (110) has at least one heat exchanger (80), in particular exhaust gas heat exchanger, for the pre-heating of compressed combustion air, which is arranged between the/a second compressor (26) and/or the first compressor (32) and the combustion chamber (50), wherein the heat exchanger (80) is connected to the gas turbine (30) on the exhaust gas side for heat transfer.

8. The drive system (100) according to any one of the preceding claims,
**characterized in that**
at least one electric motor (90) is provided for driving the vehicle, in particular hybrid vehicle, which is connected to the drive battery (91).

9. A method for operating a drive system (100), in particular according to one of the preceding claims, which has at least one power unit (110) with at least one gas turbine (30), at least one reformer (60) and at least one generator (31), and at least one drive battery (91) electrically connected to the power unit (110), wherein the method comprises the following steps:
- drawing in of combustion air through at least a first compressor (32) of the gas turbine (30) and compressing of the combustion air;
- feeding of the compressed combustion air to a combustion chamber (50) which is arranged between the first compressor (32) and a turbine (33) of the gas turbine (30);
- vaporizing of a liquid fuel, in particular of liquid methanol, through at least one guiding device (10) which, in operation, receives heat from a combusted air/fuel mixture from the combustion chamber (50) and transfers it to the through-flowing fuel;
- feeding of the vaporized fuel to the reformer (60), which converts the vaporized fuel into a synthesis gas and feeds the latter to the combustion chamber (50);
- combusting of the air/fuel mixture in the combustion chamber (50) and driving of the turbine (33) of the gas turbine (30);
- transferring of a rotary movement from the gas turbine (30) to the generator (31) for the generating of electrical energy; and
- storing of the electrical energy in the drive battery (91), which is electrically connected to the generator (31), in order to supply at least one electric motor (90) and/or the generator (31) with electrical energy.

10. The method according to Claim 9,
**characterized in that**
the compressed combustion air, before the feeding to the combustion chamber (50), is further compressed by at least a second compressor (26), in particular an exhaust gas turbocharger (20), of the power unit (110), wherein before the further compressing, the combustion air is cooled by at least one air cooler (40), which is arranged between the first compressor (32) and the second compressor (26) in flow direction (S') of the combustion air.

11. The method according to Claim 9 or 10,
**characterized in that**
the drive system comprises a heat exchanger (80), which heats the compressed combustion air at least to an ignition temperature of the synthesis gas generated by the reformer (60).

12. The method according to one of Claims 9 to 11,
**characterized in that**
the combustion chamber (50) accelerates the combustion air to a speed which is higher than a flame speed of the synthesis gas which is to be combusted.

13. A vehicle, in particular a hybrid vehicle, with at least one drive system (100) according to one of Claims 1 to 8 and at least one electric motor (90), which is connected to the drive battery (91) of the drive system (100) for driving the vehicle.

14. A use of at least one drive system (100) according to one of Claims 1 to 8 in a vehicle, in particular a passenger vehicle and/or a lorry and/or a bus, an aircraft and/or a boat, wherein the power unit (110) generates electrical energy, and the drive battery (91) stores the electrical energy, wherein the drive battery (91) is connected to at least one electric motor (90) for driving the vehicle.

## Revendications

1. Système d'entraînement (100) pour un véhicule, en particulier pour un véhicule hybride, avec au moins un groupe électrogène (110) et au moins une batterie de système d'entraînement (91), qui sont couplés électriquement entre eux, sachant que le groupe électrogène (110) comprend :
- au moins une turbine à gaz (30), qui comporte au moins un premier compresseur (32) pour comprimer de l'air de combustion aspiré, au moins une turbine (33) pour entraîner le premier compresseur (32) et au moins une chambre de combustion (50) disposée entre eux pour brûler un mélange air/carburant, qui est reliée de façon fluidique au premier compresseur (32) et à la turbine (33) ;
- au moins un réformeur (60) pour réformer un carburant vaporisé, en particulier du méthanol vaporisé, en un gaz de synthèse, sachant que le réformeur (60) est relié à la chambre de combustion (50) pour acheminer le gaz de synthèse ; et
- au moins un générateur (31), qui est couplé mécaniquement à la turbine à gaz (30) pour recevoir et/ou initier un mouvement de rotation,
sachant que la batterie de système d'entraînement (91) est reliée électriquement au générateur (31) du groupe électrogène (110) et est adaptée à cet effet pour alimenter en énergie électrique au moins un moteur électrique (90) pour entraîner le véhicule et/ou le générateur (31),
**caractérisé en ce que**
la turbine à gaz (30) comprend au moins un système conducteur (10) pour diriger l'écoulement du mélange air/carburant brûlé, qui est disposé en direction d'écoulement (S") entre la chambre de combustion (50) et la turbine (33), sachant que le système conducteur (10) est monté en amont du réformeur (60) dans une direction d'écoulement de carburant (KS) et est adapté à cet effet pour recevoir en fonctionnement de la chaleur du mélange air/carburant brulé et vaporiser par transmission de chaleur un carburant liquide, en particulier du méthanol liquide.

2. Système d'entraînement (100) selon la revendication 1,
**caractérisé en ce que**
le système conducteur (10) comporte une pluralité de pales directrices (11) avec respectivement au moins un passage (12), qui est relié à une conduite d'alimentation (13) pour du carburant liquide et/ou prévaporisé et une conduite d'évacuation (14) pour du carburant vaporisé, sachant que le passage (12) forme une zone de transmission de chaleur (15) pour vaporiser le carburant liquide.

3. Système d'entraînement (100) selon l'une quelconque des revendications précédentes,
**caractérisé en ce que**
le réformeur (60) est adapté pour produire à partir du carburant vaporisé, en particulier du méthanol vaporisé, un gaz de synthèse avec une valeur calorifique, qui est de 10 pour cent à 25 pour cent, en particulier 13 pour cent à 20 pour cent, plus élevée qu'une valeur calorifique du carburant vaporisé.

4. Système d'entraînement (100) selon l'une quelconque des revendications précédentes,
**caractérisé en ce que**
le groupe électrogène (110) comporte au moins une unité de condensation pour produire du condensat à partir d'un flux de gaz d'échappement de la turbine à gaz (30), qui est reliée côté des gaz d'échappement à la turbine à gaz (30) ou est disposée sur la turbine à gaz (30) et le groupe électrogène (110) comprend au moins une unité d'alimentation pour acheminer le condensat au carburant liquide et/ou vaporisé.

5. Système d'entraînement (100) selon l'une quelconque des revendications précédentes,
**caractérisé en ce que**
le groupe électrogène (110) comporte au moins un vaporiseur électrique (70) pour vaporiser le carburant liquide, en particulier dans la phase de démarrage du groupe électrogène (110), qui est monté en amont du système conducteur (10) en direction d'écoulement de carburant (KS).

6. Système d'entraînement (100) selon l'une quelconque des revendications précédentes,
**caractérisé en ce que**
le groupe électrogène (110) comporte au moins un deuxième compresseur (26), en particulier un turbocompresseur (20) et au moins un refroidisseur d'air (40), qui sont disposés en direction d'écoulement (S') de l'air de combustion entre le premier compresseur (32) et la chambre de combustion (50), sachant que le refroidisseur d'air (40) est monté en amont du deuxième compresseur (26).

7. Système d'entraînement (100) selon l'une quelconque des revendications précédentes, en particulier selon la revendication 6,
**caractérisé en ce que**
le groupe électrogène (110) comporte au moins un échangeur de chaleur (80), en particulier un échangeur de chaleur des gaz d'échappement, pour préchauffer de l'air de combustion comprimé, qui est disposé entre le/un deuxième compresseur (26) et/ou le premier compresseur (32) et la chambre de combustion (50), sachant que l'échangeur de chaleur (80) est relié côté gaz d'échappement à la turbine à gaz (30) pour la transmission de chaleur.

8. Système d'entraînement (100) selon l'une quelconque des revendications précédentes,
**caractérisé en ce qu'**
au moins un moteur électrique (90) est prévu pour entraîner le véhicule, en particulier un véhicule hybride, qui est relié à la batterie de système d'entraînement (91).

9. Procédé de fonctionnement d'un système d'entraînement (100), en particulier selon l'une quelconque des revendications précédentes, qui comporte au moins un groupe électrogène (110) avec au moins une turbine à gaz (30), au moins un réformeur (60) et au moins un générateur (31) et au moins une batterie de système d'entraînement (91) reliée électriquement au groupe électrogène (110), sachant que le procédé comprend les étapes suivantes :
- aspiration de l'air de combustion par au moins un premier compresseur (32) de la turbine à gaz (30) et compression de l'air de combustion ;
- acheminement de l'air de combustion comprimé à une chambre de combustion (50), qui est disposée entre le premier compresseur (32) et une turbine (33) de la turbine à gaz (30) ;
- vaporisation d'un carburant liquide, en particulier de méthanol liquide, par au moins un système conducteur (10), qui reçoit en fonctionnement de la chaleur d'un mélange air/carburant brûlé de la chambre de combustion (50) et la transmet au carburant traversant ;
- acheminement du carburant vaporisé au réformeur (60), convertit le carburant vaporisé en un gaz de synthèse et achemine celui-ci à la chambre de combustion (50) ;
- combustion du mélange air/carburant dans la chambre de combustion (50) et entraînement de la turbine (33) de la turbine à gaz (30) ;
- transmission d'un mouvement de rotation de la turbine à gaz (30) au générateur (31) pour produire de l'énergie électrique ; et
- accumulation de l'énergie électrique dans la batterie de système d'entraînement (91), qui est reliée électriquement au générateur (31) pour alimenter au moins un moteur électrique (90) et/ou le générateur (31) en énergie électrique.

10. Procédé selon la revendication 9,
**caractérisé en ce que**
l'air de combustion comprimé est encore comprimé avant l'acheminement à la chambre de combustion (50) par au moins un deuxième compresseur (26), en particulier un turbocompresseur (20), du groupe électrogène (110), sachant qu'avant la compression ultérieure, l'air de combustion est refroidi par au moins un refroidisseur d'air (40), qui est disposé en direction d'écoulement (S') de l'air de combustion entre le premier compresseur (32) et le deuxième compresseur (26).

11. Procédé selon la revendication 9 ou 10,
**caractérisé en ce que**
le système d'entraînement comprend un échangeur de chaleur (80), qui chauffe l'air de combustion comprimé au moins à une température d'allumage du gaz de synthèse produit par le réformeur (60).

12. Procédé selon l'une quelconque des revendications 9 à 11,
**caractérisé en ce que**
la chambre de combustion (50) accélère l'air de combustion à une vitesse qui est plus élevée qu'une vitesse de propagation de la flamme du gaz de synthèse à brûler.

13. Véhicule, en particulier véhicule hybride, avec au moins un système d'entraînement (100) selon l'une quelconque des revendications 1 à 8 et au moins un moteur électrique (90), qui est relié à une batterie de système d'entraînement (91) du système d'entraînement (100) pour entraîner le véhicule.

14. Utilisation d'au moins un système d'entraînement (100) selon l'une quelconque des revendications 1 à 8 dans un véhicule, en particulier dans un véhicule de tourisme et/ou un poids lourd et/ou un autobus, un aéronef et/ou un bateau, sachant que le groupe électrogène (110) produit de l'énergie électrique et la batterie de système d'entraînement (91) cumule l'énergie électrique, sachant que la batterie de système d'entraînement (91) est reliée à au moins un moteur électrique (90) pour entraîner le véhicule.
